# FASCICULE DE BREVET EUROPEEN

(11) **EP 3 671 548 B1**
(45) Date de publication et mention de la délivrance du brevet: **24.01.2024**
(21) Numéro de dépôt: 19217893.7
(22) Date de dépôt: 19.12.2019
(51) Int. Cl.: G06V 10/75, G06V 20/20, G06T 7/73, G06V 20/52

(54) **SYSTE ME DE VISUALISATION D'UN ESPACE DE CONTRO LE PAR RAJOUT DE FRONTIE RES GRAPHIQUES AU NIVEAU D'UNE IMAGE PRISE PAR UNE CAME RA**
SYSTEM ZUR ANZEIGE EINES KONTROLLBEREICHS DURCH HINZUFÜGEN VON GRAFISCHEN BEGRENZUNGEN ZU EINEM VON EINER KAMERA AUFGENOMMENEN BILD
SYSTEM FOR VIEWING A CONTROL SPACE BY ADDING GRAPHIC FRONTIERS TO AN IMAGE TAKEN BY A CAMERA

(30) Priorité: 20.12.2018 FR 1873584
(43) Date de publication de la demande: 24.06.2020
(73) Titulaire: ETABLISSEMENTS GEORGES RENAULT, 44800 Saint Herblain (FR)
(72) Inventeur: GUIBERT, Stéphane, 44220 COUERON (FR); MACQUET, Laurent, 44240 LA CHAPELLE SUR ERDRE (FR)
(74) Mandataire: Vidon Brevets & Stratégie

(56) Documents cités:
- US-A1- 2016 088 482
- US-A1- 2017 348 061

## Description

### 1 DOMAINE DE L'INVENTION

Le domaine de l'invention est celui de la vérification d'espaces de contrôle virtuel mis en oeuvre grâce à un système de géolocalisation permettant de contrôler l'utilisation d'un outil portatif dans un volume donné au sein d'une chaîne d'assemblage ou d'une zone de travail. Plus précisément, l'invention concerne la vérification de la présence de cet espace de contrôle par un système consistant à capter des images d'un environnement réel et à les afficher en rajoutant dans l'image une symbolique représentant les frontières de cet espace.

### 2 ARRIERE-PLAN TECHNOLOGIQUE

Le contexte de l'invention est celui de l'utilisation d'outil, tel qu'un outil de vissage dans le cadre de la production industrielle et en particulier dans celui de l'industrie automobile. Ce type d'industrie utilise des systèmes de vissage permettant un traçage de la qualité de toutes les opérations de production. Ceci a amené le développement de systèmes de vissage capable d'assurer des cycles de vissage définis selon certains paramètres tels que la vitesse de rotation, le couple, l'angle, la limite élastique, etc. Ces systèmes de vissage actuellement sur le marché mémorisent les paramètres d'utilisation, le compte-rendu d'exécution, et les associe aux pièces produites. Il est ainsi possible de tracer le procédé de fabrication et de retrouver par la suite les caractéristiques de production d'une pièce.

Les visseuses portatives étaient jusqu'à une récente époque reliées par un câble à un contrôleur fournissant à l'outil la puissance électrique nécessaire et assurant une communication pour le transfert des paramètres permettant le pilotage de l'outil en terme de stratégie de vissage et l'exportation des résultats vers les réseaux informatiques. Le câble limite l'utilisation des visseuses à une zone limitée au poste de travail ce qui empêchait de fait la visseuse d'être utilisée sur une autre voiture que celle se trouvant au poste de travail de la visseuse.

Afin de favoriser l'ergonomie des opérations de vissage, des visseuses à batterie ont été développées, libérant ainsi l'utilisateur de l'encombrement du câble et limitant le risque de rayer les carrosseries avec ledit câble. Ces visseuses restent toutefois asservies à des autorisations de fonctionnement fournies par un contrôleur fixe (ou concentrateur) auxquelles elles sont connectées par des moyens radios. Le contrôleur est lui-même connecté de façon filaire à l'automate qui gère le fonctionnement général de la chaine d'assemblage.

Le bénéfice en ergonomie procuré par les outils portatifs est contrebalancé par le risque de déplacer un outil d'une zone de travail à l'autre et d'être utilisé à mauvais escient et au mauvais endroit.

Le besoin est donc apparu de contrôler le déplacement d'un outil au niveau d'un atelier ou d'une chaîne de fabrication et de ne pas autoriser son fonctionnement si son utilisateur l'active alors qu'il n'est pas là où il est censé être utilisé. Pour cette raison des systèmes de géolocalisation sont utilisés pour déterminer si la visseuse est bien dans l'espace de contrôle associé à sa zone de travail, elle-même associée à la pièce à produire ou à une opération à réaliser, et le cas échéant autoriser la visseuse à être utilisée.

Cet espace de contrôle correspond à un volume géométrique en 3 dimensions centré autour de la pièce à produire ou de l'opération à réaliser et défini par des coordonnées dans un référentiel lié à la zone de travail.

Les technologies de géolocalisation peuvent s'appuyer sur des mesures de distance utilisant des technologies telles que : mesure du temps de transmission allerretour d'un signal radio entre deux points, ces signaux appartenant aux types suivants : signaux radio Ultra Large Bande (ULB), signaux optique infrarouge, signaux ultrasonores.

De nos jours, les systèmes de géolocalisation utilisent une ou plusieurs ancres fixes en bordure de la zone de travail et au moins une étiquette embarquée sur l'outil. Le système de géolocalisation peut consister à :
- contrôler l'éloignement de l'étiquette de géolocalisation par rapport à une ancre, auquel cas l'espace de contrôle prend la forme d'une sphère ou d'une portion de sphère,
- calculer par trilatération les coordonnées de l'endroit où se trouve l'étiquette de géolocalisation par rapport au référentiel lié à la zone de travail et ensuite contrôler la présence du transpondeur et donc de l'outil dans l'espace de contrôle.

Les calculs de géolocalisation et de contrôle de la présence de l'outil dans la zone de travail peuvent être réalisés en différents endroits, tels que :
- dans les ancres connectées au contrôleur (ou concentrateur) ou dans le contrôleur lui-même à partir des signaux fournis par les ancres. Dans ce cas les coordonnées de l'espace de contrôle sont renseignées par le technicien dans le contrôleur. Dans ce cas les moyens de contrôle de la localisation de l'outil sont dans le contrôleur.
- dans l'outil lui-même, dans ce cas l'outil intègre des moyens de contrôle apte à réaliser les calculs de géolocalisation et de vérification de sa présence dans l'espace de contrôle. Ainsi l'outil est apte à se désactiver lui-même s'il n'est pas dans l'espace de travail.

Une opération de production avec un outil comme le vissage, le rivetage, ou le collage doit être réalisé sur une pièce, cette opération est physiquement à réaliser sur un ensemble de pièces placées dans une zone de travail bien défini.

Pour vérifier que les outils sont bien utilisés dans des zones de travail autorisées, un espace de contrôle est créé à l'aide d'un système de géolocalisation. Un espace de contrôle est un volume géométrique en 3 dimensions, de préférence centré autour de la pièce à produire ou de l'opération à réaliser. Cet espace de contrôle est défini par un paramétrage dans un concentrateur commandant l'outil.

La demande de brevet FR3010927 déposée par la demanderesse décrit un système de commande d'un outil industriel portatif en définissant son volume d'utilisation par apprentissage. L'outil industriel portatif est géolocalisé au sein d'un atelier ou d'une chaîne de production, et dispose d'une interface utilisateur pour le configurer dans un mode apprentissage. Selon ce mode, l'utilisateur de cet outil appuie sur un bouton au niveau de l'outil pour déterminer des points géographiques définissant les frontières de l'espace de contrôle au-delà duquel l'outil ne peut être utilisé. L'utilisateur bascule ensuite l'outil dans un autre mode permettant son utilisation dans l'espace de contrôle ainsi défini. Lors de chaque utilisation, le système de commande vérifie que l'outil se situe bien dans un espace de contrôle et programme l'outil en conséquence.

Selon cet exemple, le système de commande utilise l'outil comme moyen de localisation afin de définir l'espace de contrôle où il peut être utilisé selon une programmation déterminée. A l'inverse, si l'outil n'est pas physiquement dans un espace de contrôle au moment de son activation, alors le système de commande empêche son fonctionnement.

Quel que soit la façon qui permet de définir in situ l'espace de contrôle, celui-ci n'est pas visible à l'œil nu quand on se trouve dans l'atelier ou sur la chaine de production. L'utilisateur peut consulter sur un écran le paramétrage, la dimension et la position de ou des espace(s) de contrôle associé(s) à sa zone de travail et à son outil, mais cela le force à interagir avec la machine. Il peut également activer son outil en se déplaçant et constater s'il fonctionne ou non, mais cela prend du temps et consomme de l'énergie pour rien. De plus, ces méthodes ne permettent pas à un utilisateur de facilement percevoir la forme de l'espace de contrôle.

Le document US 2017/348061 déposé par JOSHI SANJAY, décrit un système sur roue comportant un bras robotisé tenant un outil chirurgical et commandé à distance. L'outil est géolocalisé dans l'espace et sa position par rapport à l'organe à opérer sont visualisés sur un écran. Des marqueurs graphiques s'affichent pour délimiter la zone d'intervention sur l'organe et le système contrôle l'activation et la désactivation du bras robot porteur d'outil lorsqu'il se trouve à l'extérieur d'une zone configuré par l'opérateur.

### 3 OBJECTIFS DE L'INVENTION

Il existe donc un réel besoin pour mieux informer l'utilisateur de la position d'un ou plusieurs espaces de contrôle associé(s) à un outil déterminé et de faire en sorte que l'utilisateur en perçoive facilement la forme et les frontières.

Il existe également un besoin pour définir facilement des espaces de contrôle avec des outils interactifs que les utilisateurs ont l'habitude d'utiliser.

### 4 PRESENTATION DE L'INVENTION

Selon l'invention, il est ainsi proposé un système de visualisation d'au moins un espace de contrôle se situant dans une zone de travail donnée associée à un référentiel et définissant un volume dans lequel un outil portable est autorisé à fonctionner, comportant : un système de géolocalisation apte à localiser l'outil portable, des moyens de contrôle de l'outil recevant la localisation dudit outil portable et autorisant son fonctionnement si ledit outil se situe dans l'espace de contrôle, ledit espace de contrôle ayant une frontière définie à l'intérieur de ladite zone travail par des coordonnées enregistrées dans la mémoire desdits moyens de contrôle, un dispositif portable séparé dudit outil et embarquant une caméra, un moyen de visualisation, et des moyens de détermination de la localisation et de l'orientation de ladite caméra dans ledit référentiel, ledit dispositif portable et ledit moyen de visualisation recevant lesdites coordonnées définissant les frontières de l'espace de contrôle et prennnent en compte lesdits localisation et orientation dudit dispositif portable pour émettre en temps réel des signaux visuels représentatifs desdites frontières en les projetant au sein de la zone de travail ou en les affichant sur un écran.

De cette manière, l'utilisateur de ce dispositif portable perçoit sur les images ainsi créées à la fois le monde réel et la position de la frontière de l'espace de contrôle qui apparaît visuellement sous la forme d'éléments graphiques. Il peut déplacer son dispositif, voir sous différents angles le poste de travail et le ou les espaces de contrôle associé(s) à ce poste et à un outil en particulier, et ainsi vérifier si l'espace de contrôle est correctement défini pour, le cas échéant, modifier ses coordonnées et sa forme si cela s'avère nécessaire.

Selon un premier mode de réalisation le système comporte un marqueur visuel ayant une localisation et une orientation prédéterminées dans ledit référentiel, les moyens de détermination de la localisation et de l'orientation de ladite caméra utilisent l'image dudit marqueur graphique captée par la caméra. Le marqueur visuel pourra éventuellement être collé sur une des ancres.

Selon un autre mode de réalisation, les moyens de détermination de la localisation et de l'orientation de ladite caméra exécutent une transformation homographique de l'image dudit marqueur graphique pour déterminer la localisation et l'orientation de la caméra de façon relative au marqueur visuel, puis après un transfert de repère, de déterminer la localisation et l'orientation de la caméra dans le référentiel de la zone de travail, la localisation et l'orientation du marqueur dans le référentiel de la zone de travail étant connues.

Selon un autre mode de réalisation, le dispositif est apte à communiquer avec lesdits moyens de contrôle de l'outil pour recevoir les coordonnées définissant ledit espace de contrôle dans ledit référentiel.

Selon un autre mode de réalisation, le moyen de visualisation est un écran de visualisation.

Selon un autre mode de réalisation, le dispositif intègre des moyens de génération prenant en compte lesdites coordonnées de l'espace de travail et la localisation et l'orientation de ladite caméra dans ledit référentiel, pour calculer et générer en temps réel sur ledit écran de visualisation, lesdits signaux visuels représentatifs de la frontière de l'espace de contrôle, du point de vue de la caméra, en superposition de ladite image de la zone de travail captée par la caméra.

Selon un autre mode de réalisation, le moyen de visualisation est un projecteur d'images dont l'axe de projection est placé de façon à être parallèle à l'axe de l'objectif de la caméra.

Selon un autre mode de réalisation, le dispositif intègre des moyens de contrôle aptes, en utilisant lesdites coordonnées de l'espace de travail et la localisation et l'orientation de ladite caméra dans ledit référentiel, à calculer et générer en temps réel sur ladite zone de travail lesdits signaux visuels représentatifs de la frontière de l'espace de contrôle du point de vue de la caméra.

Selon un autre mode de réalisation, les moyens de détermination de la localisation et de l'orientation de la caméra sont aptes à déterminer l'évolution de la localisation et de l'orientation de la caméra à partir d'une localisation et d'une orientation initiales connues en analysant les images successivement captées par la caméra.

Selon un autre mode de réalisation, les moyens de détermination de la localisation et de l'orientation de la caméra sont aptes à déterminer l'évolution de la localisation et de l'orientation de la caméra à partir d'une localisation et d'une orientation initiales connues en utilisant les signaux fournis par une centrale inertielle solidarisée avec ladite caméra.

Selon un autre mode de réalisation, les moyens de détermination de la localisation et de l'orientation de la caméra sont aptes à déterminer la localisation de la caméra en utilisant des signaux radio émis par une étiquette de géolocalisation solidarisée avec ladite caméra, ladite étiquette émettant par radio ces signaux vers ledit système de géolocalisation.

Selon un autre mode de réalisation, les signaux visuels émis par le moyen de visualisation comporte une indication graphique pour indiquer si le dispositif portable est actuellement localisé à l'intérieur ou à l'extérieur de l'espace de contrôle définis par lesdites coordonnées.

Selon un autre mode de réalisation, le dispositif portable comporte un moyen pour configurer les espaces de contrôle associés à la zone de travail et à un outil en particulier.

### 5 DESCRIPTION DES FIGURES

D'autres caractéristiques et avantages de l'invention apparaîtront à la lecture de la description suivante, donnée à titre d'exemple indicatif et non limitatif, et des dessins annexés, dans lesquels :
- La figure 1 représente un schéma d'un poste de travail au sein d'un atelier ou d'une chaîne de production, selon un exemple de réalisation ;
- La figure 2 montre un schéma en perspective montrant plusieurs ancres pour la géolocalisation d'un outil et un espace de contrôle ;
- La figure 3 présente un schéma d'un poste de travail associé à un espace de contrôle selon un autre exemple de réalisation ;
- La figure 4 présente un schéma d'un poste de travail comportant un dispositif portable doté d'un moyen de projection, selon un autre mode de réalisation ;
- La figure 5 présente un schéma d'un poste de travail comportant plusieurs étiquettes de géolocalisation, selon un autre exemple de réalisation ;
- La figure 6 présente un poste de travail comportant plusieurs marqueurs visuels pour localiser le dispositif portable, selon un autre exemple de réalisation ;
- La figure 7 présente une apparence d'écran affiché sur le dispositif d'affichage portable avec un outil à l'extérieur de l'espace de contrôle.

### 6 DESCRIPTION DETAILLEE DE L'INVENTION

Sur toutes les figures du présent document, les éléments identiques sont désignés par une même référence.

Le principe général de la technique décrite repose sur l'utilisation d'un outil industriel dans un atelier ou une chaîne de production. L'invention intervient principalement lorsqu'un espace de contrôle a été créé et qu'une personne désire percevoir où il se situe au sein de sa zone de travail. Un espace de contrôle est un volume géométrique en 3 dimensions, de préférence centré autour de la pièce à produire ou de l'opération à réaliser. Cet espace de contrôle est défini par un paramétrage dans un concentrateur commandant l'outil portatif, ou dans l'outil lui-même si ce dernier intègre des moyens de contrôle permettant de se désactiver lui-même s'il n'est pas dans cet espace de contrôle.

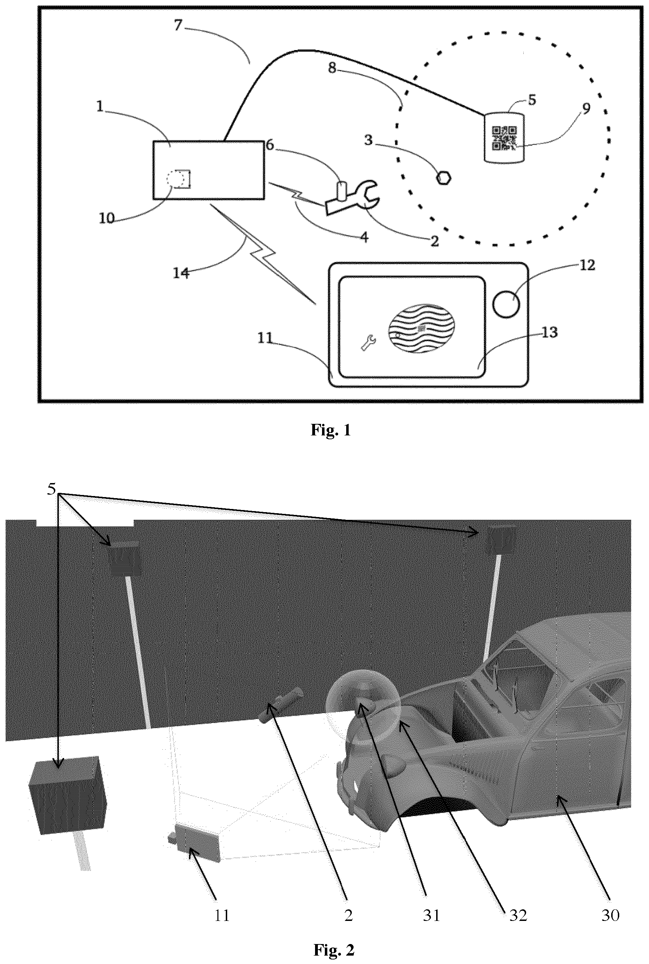

La **Fig. 1** représente un schéma d'un poste de travail au sein d'un atelier ou d'une chaîne de production, selon un premier mode de réalisation. Le poste de travail est équipé d'un contrôleur 1 communiquant avec un outil 2. L'outil est par exemple une visseuse portative, ou tout outil électroportatif apte à réaliser un travail selon des paramètres émis par le contrôleur 1. Le travail est par exemple le vissage d'un écrou 3, ou une opération de collage ou de sertissage réalisé sur une pièce ou un ensemble de pièces. L'outil 2 dispose d'un bouton, typiquement une gâchette, pour lancer le travail, mais le contrôleur peut inhiber cette action et empêcher l'outil de fonctionner, si celui-ci ne se trouve pas dans son espace de contrôle. Le contrôleur 1 dispose d'un moyen de communication 10 pour transmettre des commandes à l'outil par une liaison radio 4, la liaison peut être unidirectionnelle ou bidirectionnelle, permettant ainsi à l'outil d'émettre vers le contrôleur un compte-rendu du travail effectué.

Le poste de travail dispose d'un moyen de géolocalisation de l'outil 2. Ce moyen peut utiliser des techniques telle que :
- l'utilisation des ultrasons, pour cela l'outil est équipé d'un transducteur et l'atelier dispose de micro à des emplacements fixes,
- une technologie radio utilisant une ou plusieurs ancres 5.

Dans ce dernier cas, les ancres sont fixées sur une structure environnant le poste de travail et constitue un référentiel fixe. Elles émettent un signal radio qui déclenche une réponse de l'outil, la localisation des outils peut utiliser des techniques de triangulation (utilisation de mesure d'angles depuis l'ancre) ou de multi-latération (utilisation de mesures de distances entre l'outil et plusieurs ancres) utilisant la technologie Ultra Large Bande en abrégé ULB, ou en Anglo saxon « UWB » pour « Ultra Wide Band ». Le contrôle de la présence de l'outil dans un espace de contrôle peut nécessiter l'usage d'au moins une ancre 5 permettant de réaliser un simple contrôle de distance entre ladite ancre et l'outil 2. Le moyen de géolocalisation fournit les coordonnées de l'outil dans un repère associé aux ancres et au poste de travail.

L'outil est doté d'une étiquette de géolocalisation 6, appelé quelquefois par les hommes du métier : « tag » ou « transpondeur », pour communiquer avec les ancres 5 et renvoyer un signal radio permettant à l'ancre de déterminer les coordonnées de l'outil dans le poste de travail. La connaissance des coordonnées de l'outil est nécessaire pour déterminer s'il se situe ou non dans l'espace de contrôle 8 où il peut être utilisé. L'ancre 5 communique avec le contrôleur à travers une liaison filaire 7. Un marqueur graphique 9 est avantageusement placé dans l'espace de contrôle afin d'identifier le poste et de fournir des indications visuelles de localisation et d'orientation. Ce marqueur graphique 9 est constitué d'une image réelle facilement identifiable par un algorithme de reconnaissance d'image. Le marqueur graphique 9 peut contenir des informations sous la forme simple d'un code barre, d'un QR code ou plus complexe de glyphes de langage. Ces informations peuvent contenir des identifiants ou références et notamment l'identifiant du concentrateur associé au poste de travail où se trouve le dispositif de visualisation. Dans l'exemple illustré par la **Fig.1****,** l'ancre est placée au centre d'un cercle représentatif de la frontière d'un espace de contrôle 8.

L'espace de contrôle virtuel 8 n'est par principe visible sur un poste de travail. La présente invention permet à un technicien méthode, en charge de l'installation du poste de travail de percevoir cet espace de contrôle à l'aide d'un dispositif portable 11 émettant des signaux d'images en réalité augmentée. Ce dispositif portable embarque une caméra 12 destinée à capter des images du poste de travail et ainsi de déterminer la localisation et l'orientation dudit dispositif portable 11 dans le référentiel de la zone de travail, soit par une transformation homographique d'un marqueur visuel de localisation et d'orientation connues, soit en calculant la trajectoire dudit dispositif portable en analysant les images successives fournies par la caméra à partir d'une localisation et orientation connues. Ce procédé est plus particulièrement connu sous le nom de « Optical flow » en anglais.

Selon un premier mode de réalisation, le dispositif dispose d'une caméra 12 et d'un écran 13 éventuellement tactile dont la surface est orientée dans le sens opposé de la caméra. Ce dispositif est typiquement une tablette, ou un casque de réalité virtuelle.

Selon un mode préféré de réalisation, le dispositif portable 11 possède les moyens d'analyse des images captées par la caméra 12 permettant de déterminer la localisation et l'orientation du dispositif portable ainsi que des moyens de contrôle aptes, en utilisant lesdites coordonnées de l'espace de travail et la localisation et l'orientation de ladite caméra dans ledit référentiel, à calculer et afficher en temps réel sur ledit écran de visualisation lesdits signaux visuels représentatifs de la frontière de l'espace de contrôle, du point de vue de la caméra, en superposition de ladite image de la zone de travail captée par la caméra.

Selon une variante de réalisation, le dispositif portable entre en communication avec un serveur distant qui effectue à distance les calculs et renvoie des données d'image à afficher en réalité augmentée. Ce serveur distant peut être le contrôleur 1. Selon cette première variante, ce serveur distant dispose d'un moyen de réception radio (Wifi par exemple) pour recevoir les données visuelles provenant de la caméra, d'un moyen de calcul permettant de traiter les données visuelles reçues et d'un moyen d'émission au dispositif d'affichage portable 12 de données d'image en réalité augmentée.

Nous allons maintenant montrer comment l'utilisateur d'un dispositif portable peut se servir du système objet de la présente invention pour visualiser les espaces de contrôle associés à un poste de travail et à un outil en particulier.

La caméra 12 est orientée vers le poste de travail en pointant de préférence le marqueur visuel 9. Le dispositif portable 11 analyse les images et repère dans les données le marqueur visuel 9. Le dispositif portable 11 lit dans sa mémoire d'enregistrement les signatures des différents marqueurs graphiques placés dans cet atelier ou cette chaîne de production et retrouve par comparaison celui qui correspond aux images reçues. Par la même occasion, il peut ainsi reconnaître l'identifiant du contrôleur associé à la zone de travail ainsi que la référence SSID de son point d'accès Wifi. Le dispositif portable 11 peut ainsi recevoir de la part du contrôleur les coordonnées de l'espace de contrôle de cette zone de travail, en utilisant la liaison Wifi 14 établissant une communication entre le dispositif portable et le contrôleur. Puis, en utilisant une technique connue en soi de transformation homographique, le dispositif portable 11 calcule en temps réel la localisation relative et l'orientation de la caméra par rapport à ce marqueur visuel. Connaissant la localisation du marqueur visuel et son orientation dans le poste de travail, le dispositif 11 peut ainsi calculer la position de la caméra au sein du référentiel associé à ce poste de travail. Par ailleurs, le dispositif 11, connaissant les coordonnées de l'espace de contrôle, peut ainsi calculer les signaux visuels représentatifs des frontières de l'espace de contrôle du point de vue de la caméra, c'est à dire en utilisant les images captées par la caméra. A la suite de quoi, en utilisant un logiciel de réalité augmentée, le dispositif portable 11 émet ces signaux visuels en superposition de l'image de la zone de travail. Le dispositif portable 11 affiche alors des signaux en réalité augmentée. De cette manière, l'utilisateur peut voir sur l'écran 13 l'image réelle captée par la caméra 12 et un élément graphique représentatif de la frontière de l'espace de contrôle et de sa position du point de vue de la caméra. L'utilisateur du dispositif portable peut ainsi voir la frontière de l'espace de contrôle en superposition de l 'image de la zone de travail captée par la caméra 12.

Cet élément graphique représentatif de la frontière de l'espace de contrôle symbolise par exemple un mur vertical formé par des traits fins et parallèles entre eux, à travers duquel l'utilisateur voit les objets derrière ce mur par transparence. Si l'espace de contrôle est un volume sphérique centré autour du marqueur graphique 9, alors il apparaît sur l'écran 13 comme une sphère virtuelle transparente. L'écran affichant en temps réel l'image captée par la caméra, l'utilisateur peut se déplacer dans l'atelier en avançant ou en reculant face au marqueur visuel 9. Dans son déplacement, le dispositif d'affichage 11 peut traverser la frontière de l'espace de contrôle, une indication visuelle change alors d'aspect sur l'écran 13, par exemple le fond d'écran est rouge lorsque le dispositif se trouve à l'extérieur de l'espace de contrôle et le fond d'écran apparaît en vert lorsque le dispositif se trouve à l'intérieur.

Le prototype réalisé pour expérimenter le système de visualisation objet de la présente invention a fourni de bons résultats en utilisant un capteur photo numérique de 5 Mégapixel au format 4/3. Cette définition est privilégiée par rapport à une résolution supérieure comme 12 Mégapixel ou plus, qui permet certes une plus grande précision des détails mais au détriment du temps de traitement d'image. Le capteur associé à une lentille de 50mm autorise une vue restreinte de la scène, une lentille dite grand angle de 20mm permet une vue de la scène accompagnée de son environnement proche. Le processeur de traitement d'images possède une fréquence élevée, et de préférence supérieure à 2GHz, permettant ainsi un traitement d'image rapide et performant. Ce traitement est facilité par une mémoire de travail de plus de 1Gigaoctets pour le stockage des images ainsi produites.

La **Fig. 1** décrit un schéma d'un poste de travail avec une ancre unique centrée à l'intérieur d'un espace de contrôle, dont la frontière est représentée par un cercle. Cet exemple illustre le cas où l'espace de contrôle est une sphère, qui est définie par un rayon autour d'un point référencé.

La **Fig.2** est un schéma en perspective montrant plusieurs ancres 5 permettant la géolocalisation d'un outil 2, un espace de contrôle 8 et un véhicule 30 en cours de construction. L'espace de contrôle concerne une opération à réaliser se situant sur un phare 31 de ce véhicule. Dans l'exemple illustré, l'outil 2 n'est pas dans l'espace de contrôle et le contrôleur 1 associé à cet outil empêche son fonctionnement. Le dispositif d'affichage portable 11 est pointé en direction du phare et l'image affichée présente à la fois l'image du phare et un élément graphique 32 représentant l'espace de contrôle, à savoir une sphère.

La présence de plusieurs ancres 5 permet de réaliser une géolocalisation par trilatération, la mesure de distance entre l'outil et les ancres s'effectue par l'analyse des communications ULB successives entre l'étiquette de géolocalisation 6 apposée sur l'outil et chacune des ancres. Les coordonnées de l'étiquette dans ledit référentiel sont calculées.

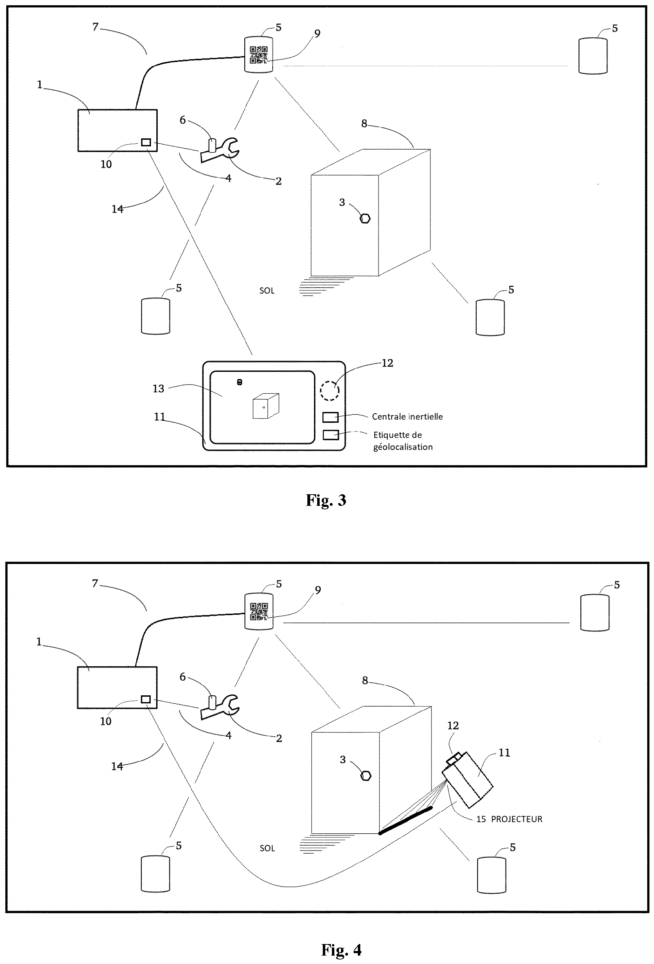

La **Fig. 3** représente un schéma d'un poste de travail associé à un espace de contrôle selon un autre exemple de réalisation. Ce poste comporte quatre ancres 5 et un espace de contrôle dont la frontière 8 présente une forme de parallélépipède rectangle. Aucune des ancres n'est située dans l'espace de contrôle. Les liaisons radio entre les différentes ancres sont représentées par des traits fin. De façon générale, la frontière d'un espace de contrôle peut prendre n'importe quelle forme telle que : une sphère ou un parallélépipède rectangle, ou un cylindre.

La **Fig. 4** représente un schéma d'un poste de travail comportant un dispositif portable doté d'un moyen de projection, selon un autre mode de réalisation. Le dispositif portable 11 embarque un projecteur d'images projetant des signaux visuels sur un objet présent dans la zone de travail ou sur la pièce à produire. L'axe de projection des signaux visuels projetés est de préférence parallèle à l'axe de captation des images de la caméra. Les images captées par la caméra 12 déterminent la localisation et l'orientation du dispositif portable. En prenant en compte les coordonnées de l'espace de contrôle, le dispositif portable émet des signaux visuels sur les surfaces des objets présents à l'endroit où les frontières de l'espace de contrôle se juxtaposent avec lesdites surfaces.

Le dispositif n'est toutefois apte à projeter des signaux visuels significatifs que sur des surfaces dont la position lui serait connue, par exemple le sol, ou suivant une direction de projection coplanaire aux frontières.

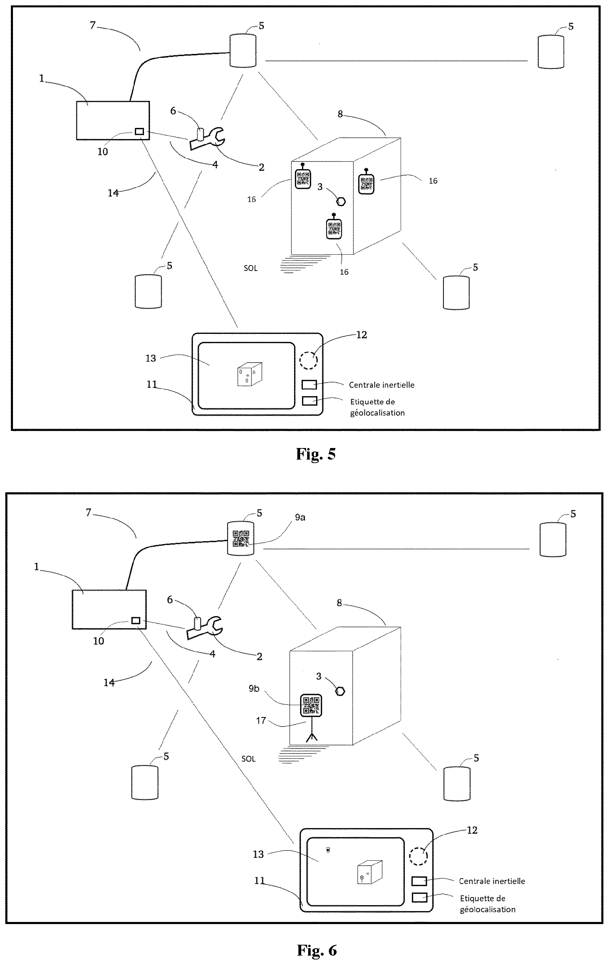

La **Fig. 5** représente un schéma d'un poste de travail comportant plusieurs étiquettes de géolocalisation, selon un autre mode de réalisation. Dans l'exemple illustré, le poste de travail intègre des composants distincts du dispositif d'affichage, au nombre de 3 par exemple, et placés par l'opérateur dans la zone de travail dans le voisinage de la pièce sur laquelle le vissage doit être réalisé. Chacun de ces composants porte une étiquette 16 communiquant avec le système de géolocalisation et possédant un identifiant de telle sorte qu'ils puissent être localisés par le système de géolocalisation. Les coordonnées de chaque composant dans le référentiel, associées avec son identifiant sont transmises par le système de géolocalisation au contrôleur, puis transmises au dispositif d'affichage par les moyens de communication radio WIFI.

Par ailleurs chaque composant porte un marqueur visuel qui permet au dispositif d'affichage d'y reconnaître l'identifiant du composant. Ceci permet au dispositif d'affichage d'associer à l'image perçue par la caméra de chaque composant, sa localisation. En prenant soin d'avoir les 3 composants dans le champ de la caméra, les moyens de détermination de la localisation et de l'orientation de ladite caméra exécutent une transformation homographique de l'image des 3 composants pour déterminer la localisation et l'orientation de la caméra de façon relative aux 3 composants, puis après un transfert de repère, de déterminer la localisation et l'orientation de la caméra dans le référentiel de la zone de travail, les localisations des 3 composants dans le référentiel de la zone de travail étant connus.

La **Fig. 6** représente un schéma d'un poste de travail comportant plusieurs marqueurs visuels pour localiser le dispositif portable, selon un autre mode de réalisation. Un premier marqueur visuel 9a de localisation et orientation connues est présent dans la zone de travail, par exemple porté par une ancre du système de géolocalisation. Selon cet autre perfectionnement, le système intègre également au moins un composant portant un second marqueur visuel 9b et distinct du dispositif d'affichage. Ce composant est placé par l'opérateur dans la zone de travail dans le voisinage de la pièce sur laquelle le vissage doit être réalisé.

L'opérateur oriente le dispositif d'affichage de telle sorte à avoir les 2 marqueurs visuels dans le champ de la caméra. Puis Les moyens de détermination de la localisation et de l'orientation de ladite caméra exécutent les étapes suivantes :
- transformation homographique de l'image du premier marqueur visuel pour déterminer la localisation et l'orientation de la caméra de façon relative à ce premier marqueur visuel,
- transformation homographique (inverse) de l'image du second marqueur visuel pour déterminer sa localisation et son orientation de façon relative au dispositif d'affichage,
- calcul par un changement de repère de la localisation et de l'orientation du second marqueur de façon relative au second marqueur,
- calcul par un changement de repère et enregistrement de la localisation et de l'orientation du second marqueur de façon relative au référentiel de la zone de travail connaissant la localisation et l'orientation du second marqueur dans ledit référentiel,
- lecture et enregistrement de l'identifiant du composant portant le second marqueur,
- association de la localisation et de l'orientation du second marqueur porté par le composant avec l'identifiant de ce composant.

De cette manière, l'opérateur n'est pas obligé de conserver le premier marqueur dans le champ visuel de la caméra et peut effectuer l'examen de la zone de contrôle en ayant dans le champ de la caméra le second marqueur, qui sert ainsi de « relais visuel ». Les moyens de détermination de la localisation et de l'orientation de la caméra peuvent en temps réel déterminer la localisation et l'orientation de la caméra en réalisant une transformation homographique du premier marqueur.

Le composant est un support inerte de marqueur visuel fixable grâce un pied magnétique dans l'environnement de la pièce sur laquelle le vissage doit être effectué. Il est facilement manipulable par l'opérateur et constitue un relai du second marqueur et apporte de par sa proximité potentielle avec la pièce à visser une plus grande facilité dans l'examen de l'espace de contrôle. Plusieurs composants peuvent être utilisés si la complexité de l'espace de contrôle le nécessite.

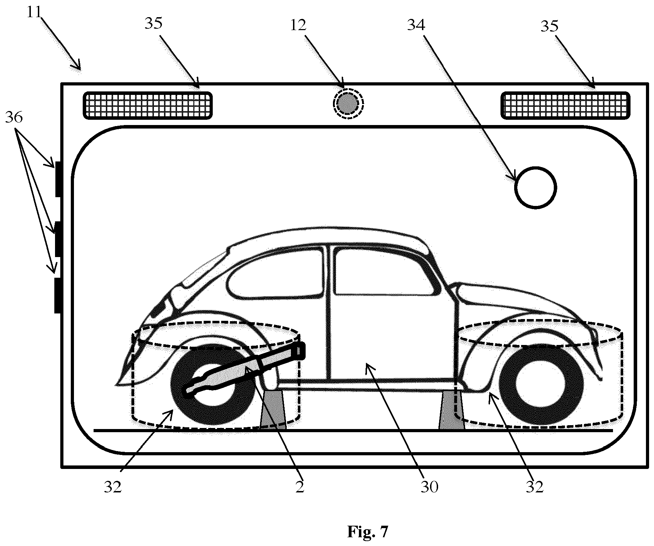

La **Fig. 7** présente une apparence d'écran affichée sur le dispositif d'affichage portable 11 avec un outil dans un espace de contrôle. La caméra 12 du dispositif (qui est représenté en pointillé car visible de l'autre côté de l'appareil) capte des images du poste de travail, comme par exemple l'image d'un véhicule 30 sur la chaîne de production et l'écran 13 visualise ces images. Quatre espaces de contrôle 32 sont associés à ce poste de travail et sont centrées sur les pneus, le véhicule étant de profil, seules deux zones représentées par des cylindres englobant le pneu sont affichées sur l'écran 13.

Une icône 34 apparaît sur l'écran indiquant si le dispositif portable (11) est actuellement localisé à l'intérieur ou à l'extérieur d'un espace de contrôle dont la frontière apparaît à l'écran. Cette indication est éventuellement doublée par l'émission d'un signal sonore sur des haut-parleurs 35 dont le dispositif d'affichage portable est équipé, ce signal peut être un son continu. De cette manière, l'opérateur tenant le dispositif portable perçoit si ce dernier est à l'intérieur ou à l'extérieur d'un espace de contrôle.

Selon un autre perfectionnement, le système reçoit et traite les images captées par la caméra pour en extraire des lignes caractéristiques. L'image affichée sur le dispositif d'affichage portable 11 est alors simplifiée, donnant l'impression d'observer un dessin animé. Ce type de représentation permet de n'afficher que des éléments importants et d'effacer les détails qui pourraient gêner l'observation, une telle représentation peut mettre d'avantage en évidence le ou les espace(s) de contrôle.

Selon un autre perfectionnement, le dispositif d'affichage portable 11 permet également de configurer la position et la forme de l'espace de contrôle associé à ce poste et à un outil en particulier, au lieu de devoir accéder au contrôleur pour modifier ou définir les coordonnées de l'espace de contrôle. Pour cela, l'utilisateur place son dispositif 11 dans un mode configuration en utilisant l'écran tactile ou des boutons 36 et pointe un marqueur graphique 9. En se déplaçant successivement, il enregistre différents points en 3D qui sont situés sur la frontière de l'espace de contrôle en cours de définition. Le programme de configuration peut comprendre une étape au cours de laquelle l'opération choisit la forme de l'espace de contrôle (par exemple, une sphère centrée autour d'un point, un cylindre centré autour d'un axe vertical, parallélépipède rectangle, structure prismatique, ...). A la suite de cette étape, le programme de configuration demande à l'utilisateur de placer son dispositif d'affichage portable à des points caractéristiques permettant de déterminer cet espace de contrôle. De cette manière, le même appareil sert à la fois pour définir l'espace de contrôle, le visualiser et éventuellement le modifier in situ s'il ne convient pas à l'opération à réaliser.

Comme il a été dit précédemment, la caméra 12 est pointée en direction du marqueur graphique 9 pour déterminer sa position et son orientation au sein du poste de travail. l'utilisateur peut ensuite se déplacer avec son dispositif d'affichage portable 11 sans avoir besoin de toujours maintenir la caméra dirigée vers le marqueur graphique. Pour cela et selon un perfectionnement, les mouvements du dispositif d'affichage portable 11 sont déterminés et sa trajectoire est calculée à partir de la position initiale où le marqueur visuel 9 apparaît dans les images captée. Dès que le marqueur visuel 9 n'apparaît plus dans les images captées par la caméra, alors le système de visualisation prend en compte les données de trajectoire pour déterminer la position de la caméra et son orientation. Le moyen permettant de calculer les mouvements du dispositif d'affichage portable 11 est avantageusement le flux d'images captées par la caméra au cours du mouvement. Le flux d'images constitue une succession d'images 2D capturées par une caméra qui peut calculer la trajectoire et l'orientation du capteur de la caméra. Cette technique suit dans les images capturées successivement dans le temps des points caractéristiques de ces images, et calcule la trajectoire de ces points de façon relative à la caméra, et par conséquent la trajectoire de la caméra dans son environnement extérieur.

Selon une variante de réalisation, le moyen permettant de calculer les mouvements du dispositif d'affichage portable 1 est une centrale inertielle intégrée dans un composant électronique MEMS embarqué dans le dispositif d'affichage portable 11. Une centrale inertielle fournit en temps réel des signaux d'accélération et de fréquence de rotation, selon trois axes orthogonaux et selon une fréquence d'échantillonnage donnée. Selon une autre variante, les données fournies par la centrale inertielle embarquée sont utilisées en complément des données produites à partir du flux optique, ajoutant ainsi de la précision aux données de localisation du dispositif d'affichage portable 11.

Selon une autre variante de réalisation, le moyen permettant de déterminer la localisation du dispositif d'affichage portable peut être une étiquette solidarisée audit dispositif et communiquant avec le dispositif d'affichage et communiquant avec le système de géolocalisation. Dans ce cas le système de géolocalisation détermine en temps réel la localisation de l'étiquette, communique les coordonnées de cette localisation au contrôleur qui lui-même peut les transmettre au dispositif portable par les moyens de communication radio WIFI. Ainsi la détermination de la localisation du dispositif portable peut être fiabiliser sans dépendre de la caméra.

Selon une autre variante le dispositif d'affichage peut porter 3 étiquettes distinctes et communiquant avec le dispositif de géolocalisation. Ainsi la détermination de la localisation de chaque étiquette peut, non seulement permettre la détermination de la localisation du dispositif d'affichage, mais aussi le calcul de son orientation.

Bien que décrits à travers un certain nombre d'exemples de réalisation détaillés, les dispositifs proposés comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en oeuvre ensemble, ou séparément, ou bien substitués les uns aux autres.

En outre, il se peut que certains dispositifs décrits ci-dessus n'incorporent pas la totalité des modules et fonctions prévus pour les modes de réalisation décrits.

## Revendications

1. Système de visualisation d'au moins un espace de contrôle se situant dans une zone de travail donnée associée à un référentiel, ledit espace de contrôle définissant un volume dans lequel un outil portable est autorisé à fonctionner, ledit système comportant
- un contrôleur apte à émettre des paramètres de réalisation d'un travail, ledit outil étant apte à réaliser ledit travail selon lesdits paramètres émis par ledit contrôleur, et disposant d'un bouton de lancement dudit travail ;
- un système de géolocalisation apte à déterminer les coordonnées dudit outil portable dans ledit référentiel ;
- des moyens de contrôle dudit outil aptes à recevoir lesdites coordonnées dudit outil portable, lesdits moyens de contrôle étant aptes à :
- autoriser le fonctionnement dudit outil portable, par actionnement dudit bouton, si ledit outil se situe dans ledit espace de contrôle,
- inhiber le fonctionnement dudit outil, par actionnement dudit bouton, si ledit outil ne se situe pas dans ledit espace de contrôle,
ledit espace de contrôle ayant une frontière définie, à l'intérieur dudit référentiel associé à ladite zone travail, par des coordonnées enregistrées dans la mémoire desdits moyens de contrôle,
- un dispositif portable (11) séparé dudit outil et embarquant une caméra (12) apte à capter des images de ladite zone de travail, un moyen de visualisation (13), et des moyens de détermination de la localisation et de l'orientation de ladite caméra dans ledit référentiel,
- un marqueur visuel (9) ayant une localisation et une orientation prédéterminées dans ledit référentiel, lesdits moyens de détermination de la localisation et de l'orientation de ladite caméra dans ledit référentiel utilisant l'image dudit marqueur visuel captée par ladite caméra (12),
ledit dispositif portable (11) et ledit moyen de visualisation (13) recevant lesdites coordonnées définissant ladite frontière de l'espace de contrôle et prennnent en compte lesdits localisation et orientation dudit dispositif portable pour émettre en temps réel des signaux visuels représentatifs de ladite frontière en les projetant au sein de la zone de travail ou en les affichant sur un écran, ledit système comprenant alors ledit écran.

2. Système de visualisation selon la revendication 1; **caractérisé en ce que** lesdits moyens de détermination de la localisation et de l'orientation de ladite caméra exécutent une transformation homographique de l'image dudit marqueur visuel pour déterminer la localisation et l'orientation de ladite caméra.

3. Système de visualisation selon la revendication 1; caractérisé en ce ledit dispositif est apte à communiquer avec lesdits moyens de contrôle de l'outil pour recevoir les coordonnées définissant ledit espace de contrôle dans ledit référentiel.

4. Système de visualisation selon l'une quelconque des revendications précédentes; **caractérisé en ce que** ledit moyen de visualisation est un écran de visualisation (13).

5. Système de visualisation selon la revendication 4 ; caractérisé en ce ledit dispositif intègre des moyens de génération prenant en compte lesdites coordonnées de l'espace de travail et la localisation et l'orientation de ladite caméra dans ledit référentiel, pour calculer et générer en temps réel sur ledit écran de visualisation (13) lesdits signaux visuels représentatifs de la frontière de l'espace de contrôle du point de vue de la caméra, en superposition de ladite image de la zone de travail captée par la caméra (12).

6. Système de visualisation selon l'une quelconque des revendications 1 à 3 ; **caractérisé en ce que** ledit moyen de visualisation est un projecteur d'images dont l'axe de projection est placé de façon à être parallèle à l'axe de l'objectif de la caméra.

7. Système de visualisation selon la revendication 6 ; caractérisé en ce ledit dispositif intègre des moyens de contrôle aptes, en utilisant lesdites coordonnées de l'espace de travail et la localisation et l'orientation de ladite caméra dans ledit référentiel, à calculer et générer en temps réel sur ladite zone de travail lesdits signaux visuels représentatifs de la frontière de l'espace de contrôle du point de vue de la caméra (12).

8. Système de visualisation selon l'une quelconque des revendications précédentes ; **caractérisé en ce que** lesdits moyens de détermination de la localisation et de l'orientation de la caméra sont aptes à déterminer l'évolution de la localisation et de l'orientation de la caméra (12) à partir d'une localisation et d'une orientation initiales connues en analysant les images captées par la caméra.

9. Système de visualisation selon l'une quelconque des revendications précédentes ; **caractérisé en ce que** lesdits moyens de détermination de la localisation et de l'orientation de la caméra sont aptes à déterminer l'évolution de la localisation et de l'orientation de la caméra (12) à partir d'une localisation et d'une orientation initiales connues en utilisant les signaux fournis par une centrale inertielle solidarisée avec ladite caméra.

10. Système de visualisation selon l'une quelconque des revendications précédentes; **caractérisé en ce que** lesdits moyens de détermination de la localisation et de l'orientation de la caméra sont aptes à déterminer la localisation de la caméra (12) en utilisant des signaux émis par une étiquette de géolocalisation solidarisée avec ladite caméra, ladite étiquette émettant ces signaux vers ledit système de géolocalisation.

11. Système de visualisation selon l'une quelconque des revendications précédentes ; **caractérisé en ce que** les signaux visuels projetés par le moyen de visualisation comporte une indication graphique pour indiquer si le dispositif portable (11) est actuellement localisé à l'intérieur ou à l'extérieur de l'espace de contrôle définis par lesdites coordonnées.

12. Système de visualisation selon l'une quelconque des revendications précédentes ; **caractérisé en ce que** le dispositif portable (11) comporte un moyen pour configurer les espaces de contrôle associés à la zone de travail et à un outil (2) en particulier.

## Patentansprüche

1. System zur Anzeige mindestens eines Steuerraums, der sich in einer gegebenen Arbeitszone befindet, die mit einem Bezugssystem verbunden ist, wobei der Steuerraum ein Volumen definiert, in dem der Betrieb eines tragbaren Werkzeug erlaubt wird, wobei das System umfasst:
- eine Steuereinrichtung, die geeignet ist, Ausführungsparameter einer Arbeit auszugeben, wobei das Werkzeug geeignet ist, die Arbeit gemäß den von der Steuereinrichtung ausgegebenen Parametern auszuführen, und über einen Knopf zum Starten der Arbeit verfügt;
- ein Geolokalisierungssystem, das geeignet ist, die Koordinaten des tragbaren Werkzeugs in dem Bezugssystem zu bestimmen;
- Mittel zur Steuerung des Werkzeugs, die geeignet sind, die Koordinaten des tragbaren Werkzeugs zu empfangen, wobei die Mittel zur Steuerung für Folgendes geeignet sind:
- Erlauben des Betriebs des tragbaren Werkzeugs durch Betätigung des Knopfs, wenn sich das Werkzeug in dem Steuerraum befindet;
- Sperren des Betriebs des Werkzeugs durch Betätigung des Knopfs, wenn das Werkzeug sich nicht in dem Steuerraum befindet,
wobei der Steuerraum eine Begrenzung aufweist, die im Inneren des Bezugssystems, das mit der Arbeitszone verbunden ist, eine Grenze aufweist, die durch Koordinaten definiert ist, die im Speicher der Steuer Mittel zur Steuerung mittel aufgezeichnet sind,
- eine tragbare Vorrichtung (11), die von dem Werkzeug getrennt ist und eine Kamera (12), die geeignet ist, Bilder der Arbeitszone aufzunehmen, ein Anzeigemittel (13) und Mittel zur Bestimmung des Standorts und der Ausrichtung der Kamera in dem Bezugssystem aufnimmt,
- eine visuelle Kennzeichnung (9), die einen Standort und eine Ausrichtung aufweist, die in dem Bezugssystem vorbestimmt sind, wobei die Mittel zur Bestimmung des Standorts und der Ausrichtung der Kamera in dem Bezugssystem das Bild der von der Kamera (12) aufgenommenen visuelle Kennzeichnung verwenden,
wobei die tragbare Vorrichtung (11) und das Anzeigemittel (13) die Koordinaten, welche die Begrenzung des Steuerraums definieren, empfangen und den Standort und die Ausrichtung der tragbaren Vorrichtung berücksichtigen, um in Echtzeit visuelle Signale, die für die Begrenzung repräsentativ sind, auszugeben, indem sie sie in die Arbeitszone projizieren oder indem sie sie auf einem Bildschirm anzeigen, wobei das System dann den Bildschirm umfasst.

2. Anzeigesystem nach Anspruch 1; **dadurch gekennzeichnet, dass** die Mittel zur Bestimmung des Standorts und der Ausrichtung der Kamera eine homographische Transformation des Bildes der visuelle Kennzeichnung ausführen, um den Standort und die Ausrichtung der Kamera zu bestimmen.

3. Anzeigesystem nach Anspruch 1; **dadurch gekennzeichnet, dass** die Vorrichtung geeignet ist, mit den Mittel zur Steuerung des Werkzeugs zu kommunizieren, um die Koordinaten zu empfangen, die den Steuerraum in dem Bezugssystem definieren.

4. Anzeigesystem nach einem der vorhergehenden Ansprüche; **dadurch gekennzeichnet, dass** das Anzeigemittel ein Anzeigebildschirm (13) ist.

5. Anzeigesystem nach Anspruch 4; **dadurch gekennzeichnet, dass** die Vorrichtung Erzeugungsmittel aufnimmt, welche die Koordinaten des Arbeitszone und den Standort und die Ausrichtung der Kamera in dem Bezugssystem berücksichtigen, um die visuellen Signale, die für die Begrenzung des Steuerraums aus dem Blickpunkt der Kamera repräsentativ sind, in Überlagerung des durch die Kamera (12) aufgenommenen Bildes der Arbeitszone in Echtzeit zu berechnen und auf dem Anzeigebildschirm (13) zu erzeugen.

6. Anzeigesystem nach einem der Ansprüche 1 bis 3; **dadurch gekennzeichnet, dass** das Anzeigemittel ein Bildprojektor ist, dessen Projektionsachse derart platziert ist, dass sie parallel zur Achse des Objektivs der Kamera ist.

7. Anzeigesystem nach Anspruch 6; **dadurch gekennzeichnet, dass** die Vorrichtung Steuermittel aufnimmt, die geeignet sind, unter Verwendung der Koordinaten des Arbeitsraums und des Standorts und der Ausrichtung der Kamera in dem Bezugssystem die visuellen Signale, die für die Begrenzung des Steuerraums aus dem Blickpunkt der Kamera (12) repräsentativ sind, in Echtzeit zu berechnen und auf der Arbeitszone zu erzeugen.

8. Anzeigesystem nach einem der vorhergehenden Ansprüche; **dadurch gekennzeichnet, dass** die Mittel zur Bestimmung des Standorts und der Ausrichtung der Kamera geeignet sind, die Entwicklung des Standorts und der Ausrichtung der Kamera (12) ausgehend von einem bekannten Ausgangsstandort und einer bekannten Ausgangsausrichtung durch Analysieren der von der Kamera aufgenommenen Bilder zu bestimmen.

9. Anzeigesystem nach einem der vorhergehenden Ansprüche; **dadurch gekennzeichnet, dass** die Mittel zur Bestimmung des Standorts und der Ausrichtung der Kamera geeignet sind, die Entwicklung des Standorts und der Ausrichtung der Kamera (12) ausgehend von einem bekannten Ausgangsstandort und einer bekannten Ausgangsausrichtung unter Verwendung der Signale zu bestimmen, die von einer fest mit der Kamera verbundenen Trägheitseinheit geliefert werden.

10. Anzeigesystem nach einem der vorhergehenden Ansprüche; **dadurch gekennzeichnet, dass** die Mittel zur Bestimmung des Standorts und der Ausrichtung der Kamera geeignet sind, den Standort der Kamera (12) unter Verwendung von Signalen zu bestimmen, die von einem Geolokalisierungsetikett ausgegeben werden, das fest mit der Kamera verbunden ist, wobei das Etikett diese Signale an das Geolokalisationssystem ausgibt.

11. Anzeigesystem nach einem der vorhergehenden Ansprüche; **dadurch gekennzeichnet, dass** die visuellen Signale, die durch das Anzeigemittel projiziert werden, eine grafische Angabe umfassen, um anzuzeigen, ob die tragbare Vorrichtung (11) sich gegenwärtig innerhalb oder außerhalb des durch die Koordinaten definierten Steuerraums befindet.

12. Anzeigesystem nach einem der vorhergehenden Ansprüche; **dadurch gekennzeichnet, dass** die tragbare Vorrichtung (11) ein Mittel zum Konfigurieren der Steuerräume, die mit der Arbeitszone und einem partikular Werkzeug (2) verbunden sind, umfasst.

## Claims

1. A system for viewing at least one control space being located in a given work area associated with a frame of reference, said control space defining a volume in which a portable tool is authorised to operate, said system including:
- a controller capable of transmitting parameters for carrying out a work, said tool being capable of carrying out said work according to said parameters transmitted by said controller, and having a button for starting said work;
- a geolocation system capable of determining the coordinates of said portable tool in said frame of reference;
- means for controlling said tool capable of receiving said coordinates of said portable tool, said control means being capable of:
- authorising the operation of said portable tool, by actuating said button, if said tool is located in said control space,
- inhibiting the operation of said tool, by actuating said button, if said tool is not located in said control space,
said control space having a defined border, within said frame of reference associated with said work area, by coordinates recorded in the memory of said means for controlling,
- a portable device (11) separated from said tool and embedding a camera (12) capable of capturing images of said work area, viewing means (13), and means for determining the location and orientation of said camera in said frame of reference,
- a visual marker (9) having predetermined location and orientation in said frame of reference, said means for determining the location and orientation of said camera in said frame of reference using the image of said visual marker captured by said camera (12),
said portable device (11) and said viewing means (13) receiving said coordinates defining said border of the control space and take into account said location and orientation of said portable device to transmit, in real time, visual signals representative of said border by projecting them within the work area or by displaying them on a screen, said system then comprising said screen.

2. System for viewing according to claim 1; **characterised in that** said means for determining the location and orientation of said camera execute a homographic transformation of the image of said visual marker to determine the location and orientation of said camera.

3. System for viewing according to claim 1; **characterised in that** said device is capable of communicating with said means for controlling the tool to receive the coordinates defining said control space in said frame of reference.

4. System for viewing according to any one of the preceding claims; **characterised in that** said viewing means is a viewing screen (13).

5. System for viewing according to claim 4; **characterised in that** said device incorporates generation means taking into account said coordinates of the work area and the location and orientation of said camera in said frame of reference, to calculate and generate, in real time on said viewing screen (13), said visual signals representative of the border of the control space from the viewpoint of the camera, in superposition of said image of the work area captured by the camera (12).

6. System for viewing according to any one of claims 1 to 3; **characterised in that** said viewing means is an image projector whose projection axis is placed so as to be parallel to the axis of the camera lens.

7. System for viewing according to claim 6; **characterised in** this said device incorporates the control means capable, using said coordinates of the work area and the location and orientation of said camera in said frame of reference, of calculating and generating, in real time on said work area, said visual signals representative of the border of the control space from the viewpoint of the camera (12).

8. System for viewing according to any one of the preceding claims; **characterised in that** said means for determining the location and orientation of the camera are capable of determining the evolution of the location and orientation of the camera (12) from known initial location and orientation by analysing the images captured by the camera.

9. System for viewing according to any one of the preceding claims; **characterised in that** said means for determining the location and orientation of the camera are capable of determining the evolution of the location and orientation of the camera (12) from known initial location and orientation using the signals provided by an inertial unit which is secured to said camera.

10. System for viewing according to any one of the preceding claims; **characterised in that** said means for determining the location and orientation of the camera are capable of determining the location of the camera (12) using signals emitted by a geolocation tag which is secured to said camera, said tag emitted these signals to said geolocation system.

11. System for viewing according to any one of the preceding claims; **characterised in that** the visual signals projected by the viewing means include a graphic indication to indicate whether the portable device (11) is currently located inside or outside the control space defined by said coordinates.

12. System for viewing according to any one of the preceding claims; **characterised in that** the portable device (11) includes means for configuring the control spaces associated with the work area and with a tool (2) in particular.
